(19)

Europäisches
Patentamt

European
Patent Office

Office européen
des brevets

(11) **EP 2 198 947 A1**

(12) **EUROPEAN PATENT APPLICATION**

(43) Date of publication:
**23.06.2010 Bulletin 2010/25**

(51) Int Cl.:
**B01D 61/46** (2006.01)        **B01D 61/48** (2006.01)
**B01D 61/58** (2006.01)        **B01D 71/02** (2006.01)

(21) Application number: **08172625.9**

(22) Date of filing: **22.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Aquafuel Research Limited
Sittingbourne,
Kent ME9 8HL (GB)**

(72) Inventors:
• **Bieliakov, Volodymyr Mykolaevich
03164 Kiev Ukraine (UA)**
• **Vasilyuk, Sergey Leonidovich
01133 Kiev Ukraine (UA)**
• **Dzyazko, Yuliya Sergyivna
01042 Kiev Ukraine (UA)**
• **Karpushin, Nickolay Aleksandrovych
03164 Kiev Ukraine (UA)**
• **Volkov, Sergey Vasilievich
01001 Kiev Ukraine (UA)**

(74) Representative: **Gemmell, Peter Alan
Dummett Copp LLP
25 The Square
Martlesham Heath
Ipswich IP5 3SL (GB)**

(54) **Purification of alcohols**

(57)     An aspect of the invention provides an electrodialysis cell (20) for use in purifying an alcohol (6) containing a salt. The cell comprises:

a) an anode compartment (1);

b) a cathode compartment (5);

c) a desalination compartment (3) between the anode compartment (1) and the cathode compartment (5);

d) a first concentration compartment (2) between the desalination compartment (3) and the anode compartment (1);

e) a second concentration compartment (4) between the desalination compartment (3) and the cathode compartment (5);

f) a polymeric or ceramic cation-exchange membrane (16) between the first concentration compartment (2) and the anode compartment (1);

g) a polymeric or ceramic anion-exchange membrane (17) between the second concentration compartment (4) and the cathode compartment (5); and

h) a polymeric or ceramic membrane (14,15) between the desalination compartment (3) and each concentration compartment (2,4).

Other aspects of the invention provide a electro-deionization cell for further purifying the alcohol, and a method of purifying alcohols, notably polyols, using the apparatus.

FIG. 1

**Description**

BACKGROUND

The present invention relates generally to the purification of alcohols, and particularly to the purification of polyols, notably of glycerol. Crude glycerol is produced in substantial quantities as a byproduct of the biodiesel and soap production industries. Major impurities include salt and MONG ('Matter Organic, Non-Glycerol'). For various industrial applications it is desirable to be able to purify glycerol and other polyols.

One method for purifying ethylene glycol and other polyols includes steps of reverse osmosis and/or nanofiltration, electrodialysis using a three-compartment cell with polymeric membranes, and distillation-off of water. Examples of apparatus and methods are described in WO 01/83379 and WO 2006/074259. A problem with prior art methods is that they are energy inefficient and produce a product with relatively high levels of remaining impurities. Also, undesirable byproducts may result from oxidation or reduction of ions at electrodes; for example chloride ions may produce chlorine gas in the anode compartment; or the membranes may be fouled by MONG.

SUMMARY OF THE INVENTION

Aspects of the present invention are specified in the independent claims. Preferred features are specified in the dependent claims.

The term 'alcohol' is used herein to denote organic compounds having at least one hydroxyl group linked to a saturated carbon atom. The term 'polyol' is used herein to refer to alcohols having more than one hydroxyl group. Non-limiting examples of polyols include ethylene glycol, glycerol and diethylene glycol. For convenience the invention will be described with reference to the purification of glycerol. It will be understood that the invention is not limited to this application.

BRIEF DESCRIPTION OF THE DRAWINGS

The invention will now be further described, by way of example only, with reference to the following drawings, in which:

Figure 1 is a schematic diagram of an experimental setup of an apparatus in accordance with an aspect of the invention;

Figure 2 is a schematic diagram of an electrodialysis cell in accordance with an embodiment of the invention;

Figures 3-15 and 17-18 are graphs for various results using the apparatus of Figure 1;

Figure 16 shows polymeric membranes from an embodiment of the setup of Figure 1 after an experiment;

Figure 19 shows ceramic membranes from an embodiment of the setup of Figure 1 after an experiment;

Figures 20 and 21 are graphs of, respectively, $Na^+$ v time in the concentrate from a process in accordance with an aspect of the invention, and pH of glycerine and concentrate v time;

Figure 22 is a schematic diagram of an electrodialysis module in accordance with an aspect of the invention;

Figure 23 is a schematic sectional view of the desalination compartment of the cell of Figure 2;

Figure 24 illustrates dimensions of the module of Figure 22 in accordance with an embodiment of the invention;

Figure 25 is a schematic diagram of an electrodeionization cell in accordance with an embodiment of the invention; and

Figure 26 is a flow chart for a process in accordance with an aspect of the invention.

**1.Materials**

*1.2 Water/glycerine blend.*

The water/glycerine blend was of the following composition: NaCl 3-5%, water, 5-7%, MONG- up to 3%, the rest was glycerine.

*1.3 Polymeric membranes*

Heterogeneous polymeric membranes tested in this study are listed in the table 1.

**Preparation of the membranes.**

Membranes were soaked in distilled water for 1 h until swelling was complete, then washed consecutively with 0.1 N $H_2SO_4$ and NaOH and then by water until the pH of the washings became neutral (pH 7).

Table 1

| Membrane | Manufacturer | Membrane type |
|---|---|---|
| CMI-7000 | Membrane International | Cation exchange |
| AMI-7001 | Membrane International | Anion exchange |
| Ionac MC-3470 | Bayer | Cation exchange |
| Ionac MA-3475 | Bayer | Anion exchange |
| MK-40 | Schekinoazot | Cation exchange |
| MA-40 | Schekinoazot | Anion exchange |

*1.4. Inorganic ion-exchange membranes*

1.4.1. Inorganic membranes

Inorganic ion-exchange membranes were prepared by the following procedure. The inert porous ceramic matrix was filled with hydrated zirconium dioxide (HZD) by sedimentation of its particles in the matrix. As the matrix we used ceramic membranes based on $TiO_2$, $TiO_2/Al_2O_3$, $Al_2O_3$.

1.4.2. Inorganic ion-exchangers

Ion-exchangers including composited hydrated oxide materials of Ti-Al, Zr-Al, Sn-Al with metal ratio 1:1 with specific area 100-400 $m^2/g$ were used in this study.

Possible method of synthesis

Synthesis of Ti-Al ion-exchanger

The synthesis is based on interaction of equimolar (1M) solutions of metal chlorides with a gel-forming agent (a solution of hexamine and urea with 1:3 ratio). All solutions were pre-cooled to 280 K and to the solution of $TiCl_4$ was added 10% vol. of glycerine. The solution of $AlCl_3$ was added to the solution of gel-forming agent with stirring and then the $TiCl_4$ solution. Upon mixing the reaction mixture was stored in the fridge for 2.5 h at 280K and then at ambient temperature. The formed gel was left to mature for 48 h. After that it was washed with distilled water, kept in a 10% solution of $NH_4OH$ for 24 h and washed with distilled water to neutral pH of the washing. Finally the gel was dried using azeotropic distillation with benzene, washed again with distilled water till neutral pH and air dried at 293-298K. The obtained product had an off-white colour.

**2. Electrodialysis Examples**

The electrodialysis was carried out in a five-compartment electrodialysis cell 20 having three independent liquid circuits for the alcohol 6 to be purified (in this example, glycerol), anolyte 7, and catholyte 8, a thermostat power source 10 and metering equipment 11, 12. The cell 20 comprised an anode compartment 1, a cathode compartment 5, a desalination compartment 3 between the anode compartment 1 and the cathode compartment 5, a first concentration compartment 2 between the desalination compartment 3 and the anode compartment 1, and a second concentration compartment 4 between the desalination compartment 3 and the cathode compartment 5. A polymeric or ceramic cation-exchange membrane 16 separated the first concentration compartment 2 and the anode compartment 1, and a polymeric or ceramic anion-exchange membrane 17 separated the second concentration compartment 4 and the cathode compartment 5. Ceramic or polymer membranes 14,15 were disposed between the desalination compartment 3 and each concentration compartment 2,4. In a preferred embodiment, each membrane 14,15 in contact with fluid in the desalination compartment 3 is ceramic. In a particularly preferred embodiment, each ceramic membrane 14,15 has a matrix comprising $TiO_2$, $Al_2O_3$, or a mixture of these, and each ceramic membrane 14,15 is preferably coated or filled with an ampholyte inorganic material.

The anode 18 and cathode 19 were each made of platinised titanium (50x50 mm, 1 mm thickness, Pt coating 2.5 $\mu$m). The solution of glycerol 6 to be purified was fed into the central desalination compartment 3. The catholyte 8, in this example a 0.1 M solution of $K_2SO_4$, was circulated through the compartments 5, 4 and 2. The anolyte, in this example a solution of 0.1 M $H_2SO_4$, was circulated through the anode compartment 1. A flow controller arrangement 9 was used to pump the three fluids 6,7,8 around their circuits.

We have found that by circulating the catholyte 8 through both of the concentration compartments 2,4 evolution of chlorine from chloride ions is inhibited or substantially prevented.

Glycerol 6 from the desalination chamber 3 passed to a reservoir 13 and its pH was measured using a probe 12 and pH meter 11.

*2.2. Electrodialysis with ceramic membranes.*

In this study we used combinations of polymeric and ceramic membranes.

**3 Electrodeionization Examples**

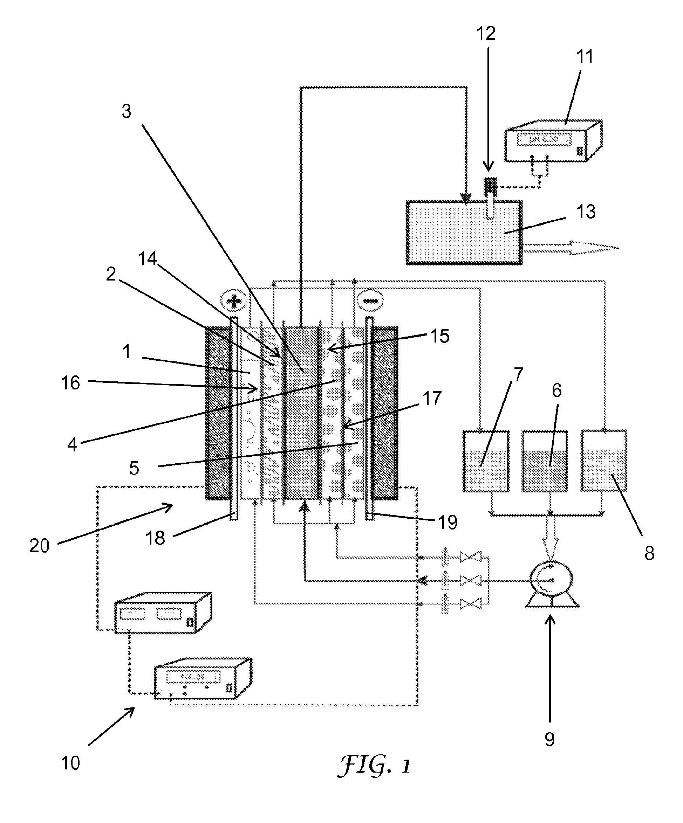

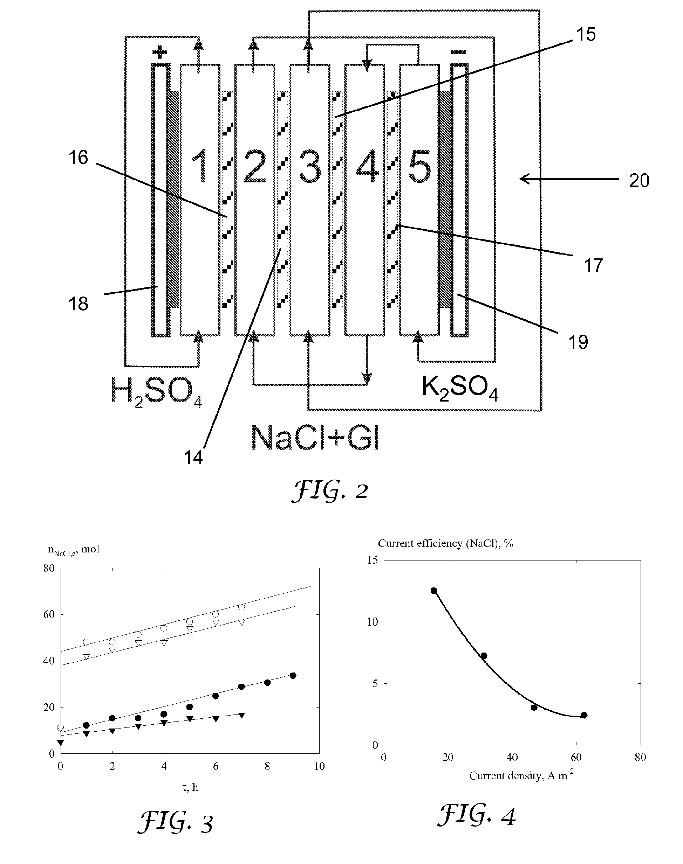

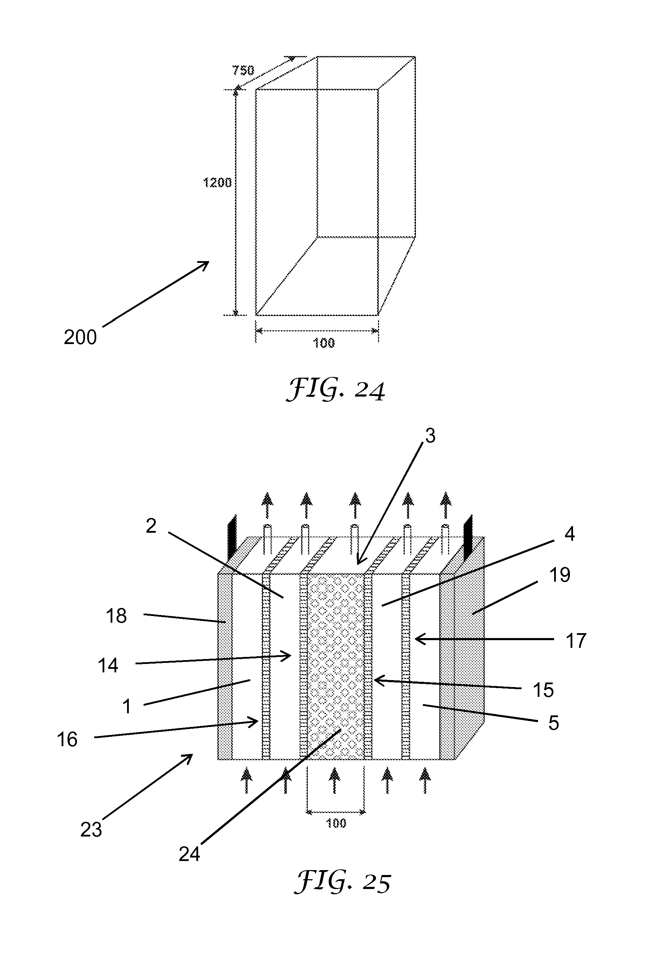

Referring now to Figure 25, the experimental set-up for electrodeionization made use of a 5-compartment cell 23 similar to the cell 20 shown in Figures 1 and 2, but with the central desalination compartment 3 filled with an inorganic ion-exchanger 24. IONAC membranes were used. The glycerine solution to be desalinated was circulated through the central compartment 3. A 0.1 M solution of $K_2SO_4$ was circulated through cathode compartment 5 and concentration compartments 2,4, and a 0.1 M solution of $H_2SO_4$ was circulated through the anode compartment 1. The solutions temperature was 293 K.

**4. Analysis**

Solutions were analysed using AAS (Na+) and argentometry (Cl-).

**5. Results and Discussion**

*5.1. Electrodialysis with polymeric membranes*

The first series of experiments was carried out with membranes MK-40 and MA-40 manufactured by Schekinoazot. 0.5 l glycerine was circulated through the central compartment with 10.8 l/h rate. The current densities were in the range 15.6-62.5 $A/m^2$, temperature 298 K, the volume of 0.5 M $K_2SO_4$ was 0.2 l.

The plot of Na+ quantity vs. dialysis time is shown in Fig 3. The curves could be approximated by linear polynomials confirming he constancy of electrolyte transfer to the concentration compartment. A small quantity of NaCl determined in the concentrate before passing of current is due to the diffusion through membranes. The instant current efficiency CE was determined by the equation:

$$CE = \frac{F\Delta n}{I\Delta\tau} \quad , \tag{1}$$

Where $\Delta n$ is the increase in Na concentration in concentration compartment at time $\Delta\tau$.. The results are in Fig.

4. The CE is below 100% and drops with increasing current.

The voltage was constant and remained in the range 5-18 V depending on the current. Glycerine pH also was constant during the experiment (about 5.5-6.0) confirming the equality of cation and anion transfer rates.

In the next series we used membranes CMI-7000 and AMI-7000. The results are in the table 2.

It is seen that in all the cases CE is 100%. Nevertheless the voltage is constant. The lower efficiency of Russian membranes (Schekinoazot) is due to the oncoming diffusion streams of electrolyte from concentration compartment to the desalination compartment.

Table 2. Dialysis with membranes CMI-7000 and AMI-7000 membranes

| Temperature, K | Current density A/m$^2$ | CE, % | Voltage, V |
|---|---|---|---|
| 298 | 15.62 | 100±0.66 | 5.5 |
| | 31.24 | 99±0.55 | 8.3 |
| | 46.86 | 99±0.78 | 13.2 |
| | 62.50 | 100±0.56 | 18.5 |
| 303 | 31.24 | 98±0.34 | 7.9 |
| | 62.50 | 99±0.78 | 18 |
| 403 | 31.24 | 99±0.65 | 7.5 |

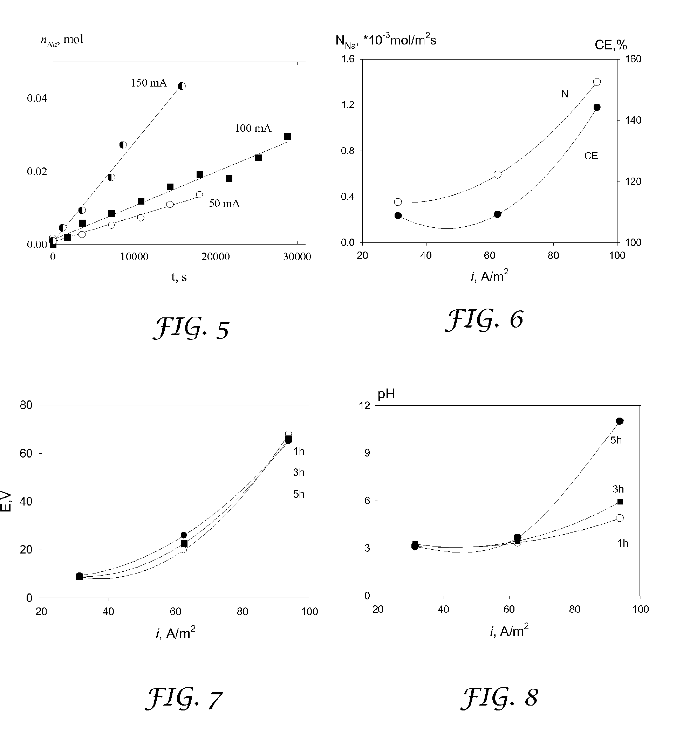

In the next series IONAC membranes were tested. The glycerine circulation rate was $6.67 \cdot 10^{-7}$ m$^3$/s. The volume of anolyte (0.1 M $H_2SO_4$) was 0.2 l, catholyte (0.1 $K_2SO_4$) 0.5 l. Glycerine and concentrate were analysed for Na+ content. Results are shown in Fig 5. They show that the Na+ transfer rate $N_{Na} = \dfrac{1}{S}\dfrac{dn_{Na}}{d\tau}$ ($S$ is membrane area) is increased with increasing current density. Fig 6 (Na$^+$ flux to concentrate and CE vs. current density) shows that the transfer and CE are increasing most at current density 93.7 A/m$^2$. Without wishing to be bound by theory, we believe that this is caused by the "overlimiting current" mode. This theory is supported by the sharp increase in voltage at current densities exceeding 62.5 A/m$^2$ (Fig 7) and alkaline pH of glycerine (Fig 8). Fig 7. graphs voltage vs. current density at 1, 3 and 5 h after the start, for IONAC membranes. Fig 8. graphs glycerine pH vs. current density for IONAC membranes.

The results for 5 h of electrodialysis are listed in table 3.

Table 3. Dialysis purification under glycerine circulation through the desalination compartment

| Current density A/m$^2$ | Purification degree, % |
|---|---|
| 32.2 | 6.4 |
| 62.5 | 7.1 |
| 93.7 | 9.4 |

In the next series the glycerine was not circulated but was passed through the desalination compartment in a single pass. The feed rate and current are listed in Table 4. The volume of anolyte (0.1 M $H_2SO_4$) was 0.25 l, 0.1 M $K_2SO_4$ volume was 0.5 l.

Table 4 Electrodialysis of glycerine under single pass conditions

| Current density A/m$^2$ | Feed rate through the desalination compartment m$^3$/s | Flux of Na$^+$ to concentrate, Mol/m$^2$ s | Purification degree, % |
|---|---|---|---|
| 50 | $2 \cdot 10^{-7}$ | $4.60 \cdot 10^{-4}$ | 0.40 |
| 100 | $1 \cdot 10^{-7}$ | $1.28 \cdot 10^{-3}$ | 3.31 |
| 100 | $2 \cdot 10^{-7}$ | $8.80 \cdot 10^{-4}$ | 0.63 |
| 200 | $1 \cdot 10^{-7}$ | $1.11 \cdot 10^{-3}$ | 3.63 |

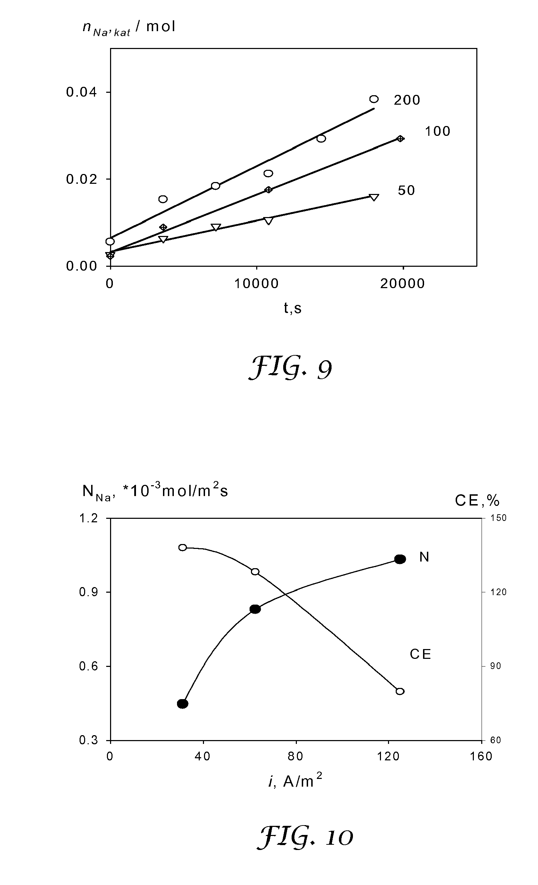

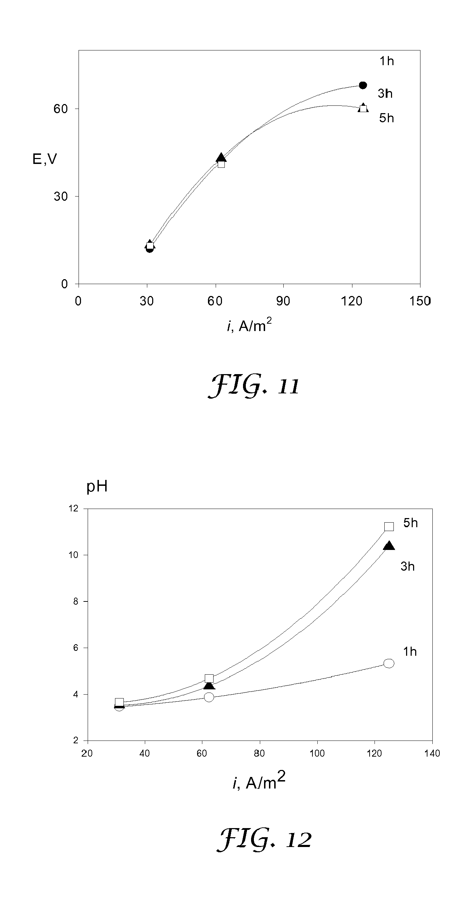

Fig. 9 shows Na+ vs. time under direct flow conditions using IONAC membranes. Fig. 10 shows Na+ flux to the concentrate and CE vs. current density using IONAC membranes. Fig. 9 shows the steady increase in Na+ concentration in the concentrate with time. Nevertheless, CE decreased with increasing current density, although when glycerine was circulated through the central compartment the purification efficiency increased with increasing applied current. In this case we also observed higher voltage (Fig. 11) and more robust glycerol pH increase (Fig. 12). Fig. 11. Graphs voltage vs. current density under direct-flow conditions and IONAC membranes. Data are given for 1, 3 and 5 h from the start. Fig.12 graphs glycerine pH vs. current density under direct-flow conditions using IONAC membranes.

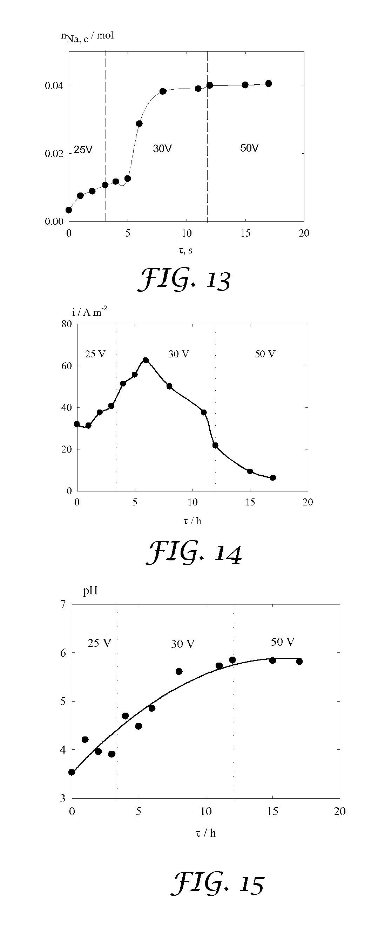

In the next experiment the desalination was carried out under static conditions on glycerine. $K_2SO_4$ solutions (0.5 l) was circulated consecutively through the cathode and anode compartments with a rate of $2.33 \cdot 10^{-7}$ $m^3$/s. Experiment was carried out under potentiostatic conditions at 25 V (0-3 h), 30 V (3-13 h) and 50 V (12-17 h). The results are shown in Figs. 13 and 14.

Fig. 13 shows the time dependence of Na+ concentration in the concentrate.

When voltage is increased from 25 to 30 V the Na+ concentration is increased, showing the rate-limiting step is the migration of Na+ ions into the bulk of the solution. After 8 h the quantity of Na+ ions in the concentrate becomes constant. Because this concentration was constant, a further increase in voltage did not result in an increase of cation flux. Fig. 14 shows that current density passes through the maximum as according to Ohm's Law the conductivity of the system increases during the first 6 h and then drops. The increase in current at the first step could not be ascribed to the acidification of the concentrate as its pH steadily increased to the neutral value (Fig. 15). This phenomenon is apparently caused by overlimiting current. This is confirmed by two-fold increase in the quantity of Na+ ions in the concentrate at 30 V, although the voltage was increase only by 1.2. Overlimiting current results in the formation of the additional convection fluxes, intensifying of mass transfer and dropping of the membrane resistance. The drop in current after 6 h is evidently caused by lowering of glycerine conductivity due to electrolyte transfer to the concentration compartment. The levelling of Na+ quantity in the concentrate is due to its exhaust in the desalination compartment. At 17 h the desalination degree was 98%. Nevertheless, the position of the plateau shows that the main quantity of Na+ ions is transferred during the first 8 h.

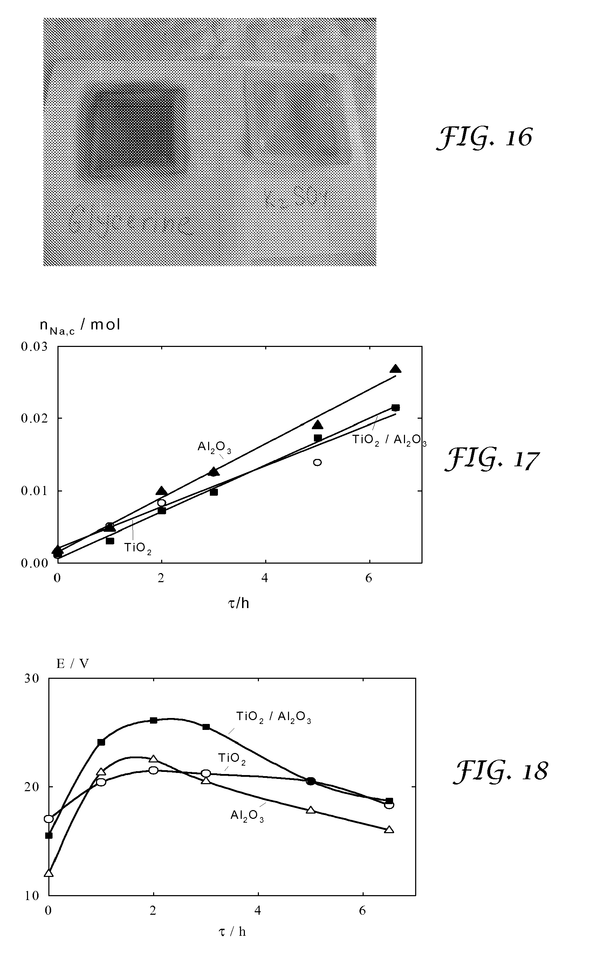

Referring now to Fig. 16, photographs are shown of polymeric membranes after use in the desalination process. The membrane to the left was in contact with glycerine. The membrane to the right divided the concentration and electrode compartments and was not in contact with glycerine. The membranes that were in contact with glycerine have brown deposits. There are no such deposits on membranes that were placed between concentration and electrode compartments. Membrane fouling causes a drop in CE under direct-flow conditions. Some changes in the colour of membranes that were not in contact with glycerine are caused by the membrane matrix transformation common under dialysis conditions and we have found that this does not cause a drop in efficiency.

**5.2 Electrodialysis with ceramic membranes.**

In the first series of experiments we used the 5-compartment cell of Figures 1 and 2. Glycerine (0.2 l) was circulated through the desalination compartment, 0.2 l $K_2SO_4$ was circulated through the cathode and concentration compartments, and 0.2 l $H_2SO_4$ was circulated through the anode compartment. The rate of the circulation of all solutions was $6.33 \cdot 10^{-7}$ $m^3$/s. The experiment was run under galvanostatic conditions at current density 31.2 A/$m^2$. During 3 h of experiment the pH of the concentrate increased from 8 to 12.3 while the glycerine pH was about 5.2-5.3. The cell voltage increased from 17 to 26 V (about two times higher than for polymeric membranes). Nevertheless CE was about 100%.

In the next series the solution feed was changed. The glycerine volume was 0.2 l, the catholyte and anolyte volume was 0.1 l and the concentrate (0.1 M $K_2SO_4$) volume was 0.2 l. The current density remained 31.2 A/$m^2$ as in the previous case. During 4 h of experiment the concentrate pH dropped from 6 to 2, glycerine pH remained around 5, and voltage increased from 13 to 32 V. The CE on NaCl was 100%. The circulation rate of all the solutions was $2.33 \cdot 10^{-7}$ m3/s. Results are shown in Figs. 17 and 18.

It is seen that the quantity of Na+ in concentrate increases linearly with time. The voltage at first is increased and then drops. The increase in voltage is caused evidently by the polarisation of a ceramic membrane and its subsequent decrease is due to the concentrate acidification. The results of the purification after 6 h are listed in Table 5.

Table 5. Purification and current efficiency using ceramic membranes

| Membrane | Purification degree (6.5 h), % | CE, % |
|---|---|---|
| $TiO_2$ | 7.5 | 76.4 |
| $TiO_2$/$Al_2O_3$ | 14.0 | 86.6 |
| $Al_2O_3$ | 22.0 | 100 |

The best results are obtained using alumina-based membranes.

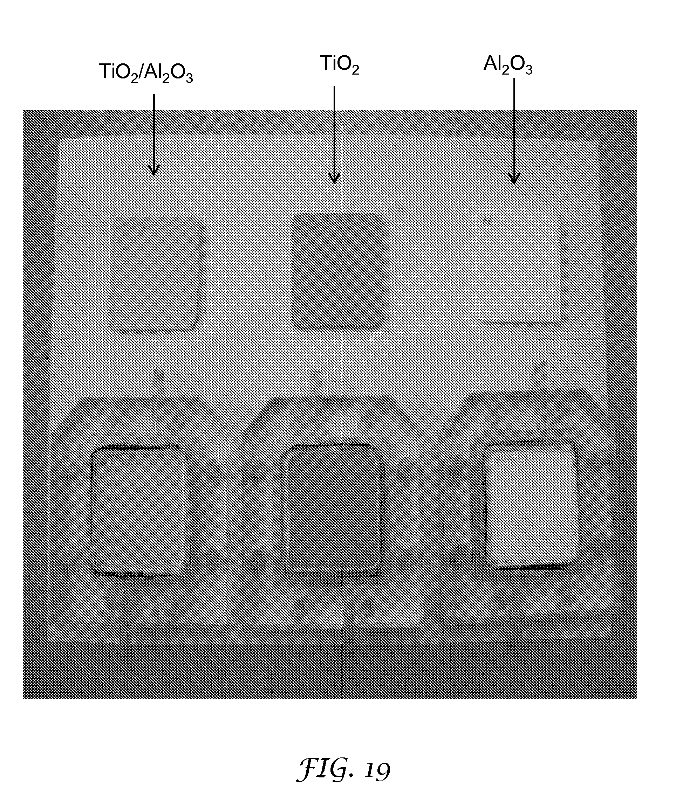

Fig. 19. shows ceramic membranes contacted with glycerine during the electrodialysis process (at the bottom) and not in contact with the glycerine (at the top). It can be seen that, unlike polymeric membranes, ceramic ones are substantially not fouled by organic impurities. Accordingly, in a preferred embodiment, each membrane adjacent to the desalination compartment is ceramic.

**5.3. Comparison of the membranes.**

Table 6 lists CE for different membranes and fouling tendency. Alumina-based ceramic and polymeric membrane have 100% CE. The former one also is not prone to fouling.

Table 6. Electrodialysis with different kinds of membranes.

| Membranes | CE NaCl, % | Fouling |
|---|---|---|
| CMI-7000, AMI-7001 | 100 | Yes |
| Ionac MC-3470 Ionac MA-3475 | 100 | Yes |
| MK-40 MA-40 | 2-13 | Yes |
| $TiO_2$ | 76.4 | No |
| $TiO_2/Al_2O_3$ | 86.6 | No |
| $Al_2O_3$ | 100 | No |

**6. Electrodeionization**

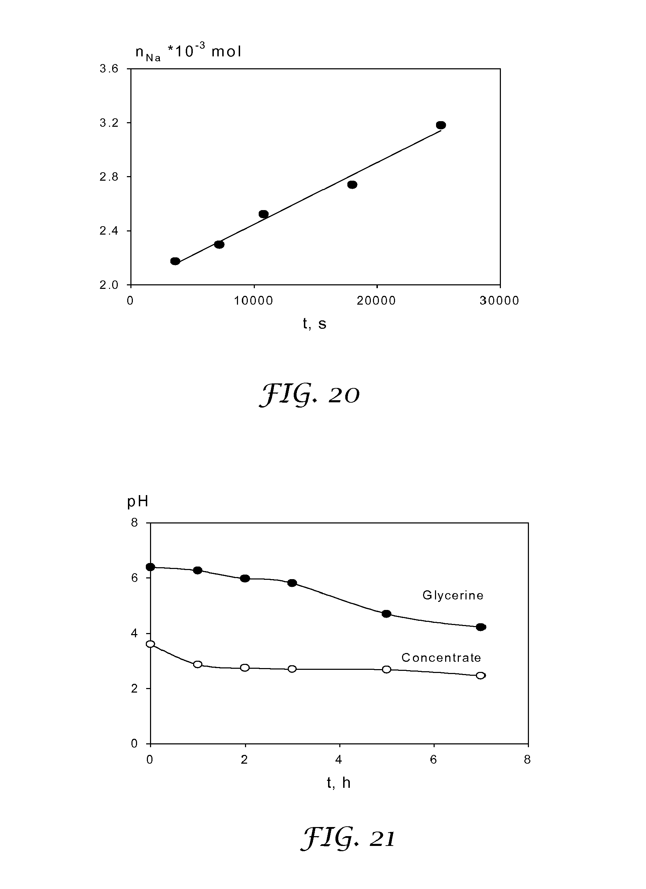

After partial purification of glycerol using electrodialysis, further purification ('polishing') was carried out using electrodeionization, with the central compartment 3 filled with ion-exchange medium 24 (Fig. 25). Experiments were run under galvanostatic conditions at current densities 6.25 and 9.4 A/m$^2$. Results are shown in Figures 20 and 21 and in table 7.

Table 7. Electrodeionization

| $I\ A/m^2$ | E, V | Purification degree, % | CE,% |
|---|---|---|---|
| 6.25 | 55 | 85 | 29 |
| 9.40 | 65 | 92 | 44 |

Fig. 18 shows that during electrodeionization purification of glycerine occurs. The small shift in pH confirms the equivalent transfer of cations and anions. The decrease in current density leads to increase in CE. However, the increase in current density results in an increase in the purification degree.

Polymeric membranes (beside those produced at Schekinoazot) have CE about 100%. However polymeric membranes in contact with glycerine are fouled. Among ceramic membranes impregnated with hydrated zirconium dioxide the best results were obtained with alumina-based ones. After 0.5 h the purification degree for 0.1 l was 22%. Also ceramic membranes are not fouled.

The electrodeionization polishing of glycerine using sorbent based on mixed hydrated oxide $TiO_2$-$Al_2O_3$ was studied. The purification degree was in the range 85-92%, CE 29-44%.

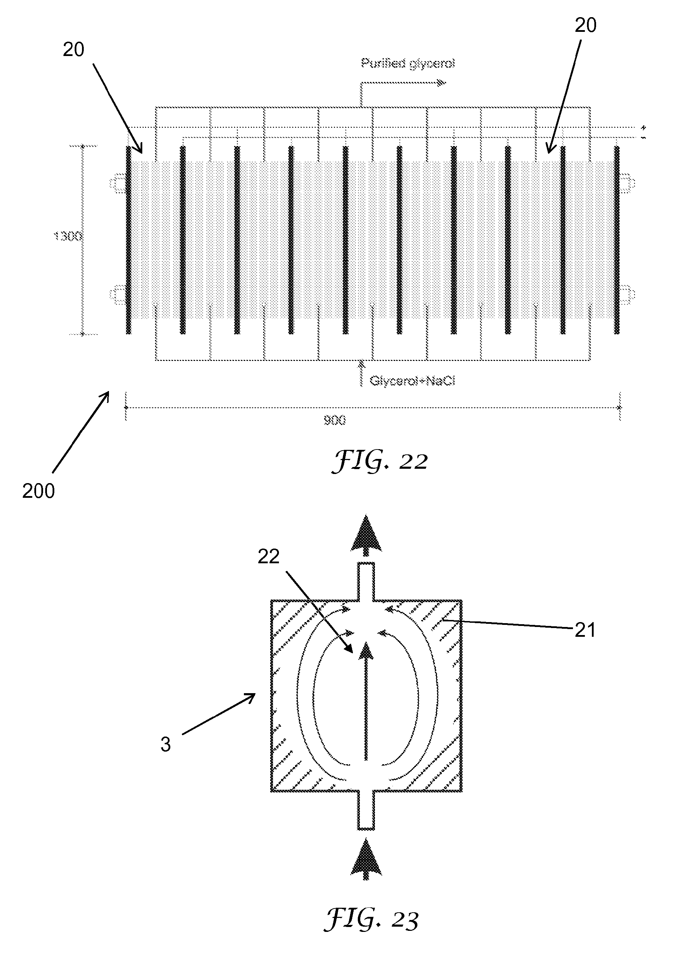

Based on these results a preferred electrodialysis unit 200 consisting of several 5-compartment electrodialysis cells 20 (in this example, nine cells) is shown in Fig. 22. The number of compartments is determined by the necessity of separating electrodes and dialysis products in order to prevent chlorine evolution and maintaining the required concentrate acidity.

We propose the following cell configuration in a preferred embodiment:

Cathode compartment - polymeric anion-exchanging membrane-concentration compartment - ceramic membrane-desalination compartment-ceramic membrane-concentration compartment - polymeric cation-exchange membrane-anode compartment. Inorganic membranes are not prone to fouling while polymeric membranes have lower resistance.

The following experimental data were used in the design of the module 200:
Initial NaCl concentration in glycerine 40 g/l; feed rate 2 l/h; current density 100 A/m$^2$, current efficiency 100%, purification degree in a direct-flow mode with 100% CE 3.3%, operating area of electrodes and membranes 16 cm$^2$.

The laminar flow of glycerine through the desalination compartment 3 results in incomplete use (about 78%) of membrane area. As shown in Fig. 23, the effective, substantially laminar flow area 22, is bounded by 'dead zones' 21 (shown as hatched areas) of little or no flow. We calculate that the introduction of baffles would result in an increase in the purification degree by about 4%.

in order to increase the purification degree to 97% we calculate that in a preferred embodiment the cell height should be increased to about 1.2 m, and in order to increase the productivity to 5 l/h the width should be increased to about 0.75 m. The preferred dimensions of the electrodialysis module 200 are shown in Fig. 24.

The module 200, in this example consisting of nine cells will have the capacity of about 1m$^3$/day. The energy consumption will be about 14 kWh/m$^3$.

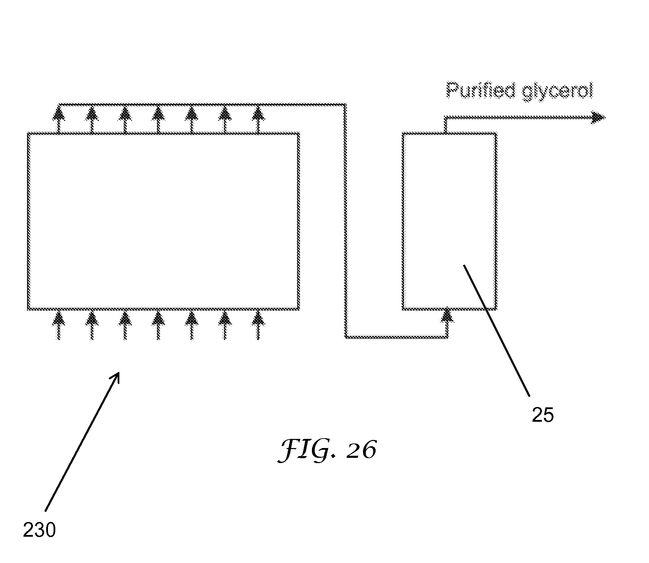

In one embodiment, the polishing of the partially refined glycerol (from 1-2 g/l to 10-20 mg/l) will be run in an electrodeionization module 230 (Fig. 26) , feeding into a tank 25,. The module 230 comprises a number of cells 23 (in this example, nine cells) side by side, with each cell 23 having an inter-membrane distance of about 100 mm (Fig. 25). The estimated energy consumption is about 2 kWh/m$^3$.

The total energy consumption is estimated at about 16 kWh/m$^3$. The residual NaCl concentration will be about 10-20 mg/m$^3$.

## Claims

1. An electrodialysis cell for use in purifying an alcohol containing a salt, the cell comprising:

   a) an anode compartment;
   b) a cathode compartment;
   c) a desalination compartment between the anode compartment and the cathode compartment;
   d) a first concentration compartment between the desalination compartment and the anode compartment;
   e) a second concentration compartment between the desalination compartment and the cathode compartment;
   f) a polymeric or ceramic cation-exchange membrane between the first concentration compartment and the anode compartment;
   g) a polymeric or ceramic anion-exchange membrane between the second concentration compartment and the cathode compartment; and
   h) a polymeric or ceramic membrane between the desalination compartment and each concentration compartment.

2. An electrodialysis cell according to claim 1, wherein each membrane adjacent to the desalination compartment is a ceramic membrane and has a matrix comprising $TiO_2$, $Al_2O_3$, or a mixture thereof; each ceramic membrane being coated or filled with an ampholyte inorganic material.

3. An electrodialysis cell according to claim 2, wherein the ampholyte inorganic material is a hydroxide or hydrated oxide of a multivalent metal.

4. An electrodialysis cell according to claim 2 or claim 3, wherein the ampholyte inorganic material is hydrated zirconium dioxide.

5. An electrodeionization cell comprising an electrodialysis cell according to any preceding claim, wherein the desalination compartment is filled with an ampholyte ion-exchange material.

6. An electrodeionization cell according to claim 5, wherein the ion-exchange material is a hydroxide or hydrated oxide of a multivalent metal.

7. A method of purifying an alcohol containing a salt, the method comprising:

   i) taking an electrodialysis cell as specified in any of claims 1-4;
   ii) providing a salt solution in the cathode compartment, the cation concentration compartment and the anion concentration compartment;
   iii) providing an acid solution in the anode compartment;

iv) passing a fluid containing the alcohol to be purified through the desalination compartment; and
v) applying a suitable voltage across the cathode and the anode to cause electrodialysis to occur.

**8.** A method according to claim 7, wherein the salt solution contains the same anion as the acid.

**9.** A method according to claim 8, wherein the anion is $SO_4^{2-}$ or $NO_3^-$.

**10.** A method according to any of claims 7-9, which is carried out under substantially galvanostatic conditions.

**11.** A method according to any of claims 7-10, wherein the salt solution is recirculated through said compartments.

**12.** A method according to any of claims 7-11, wherein the acid solution is recirculated through the anode compartment.

**13.** A method according to any of claims 7-12, wherein the alcohol is a polyol, preferably glycerol.

**14.** A method of purifying an alcohol containing a salt, the method comprising subjecting the alcohol to an electrodeionization process comprising:

i) taking an electrodeionization cell as specified in claim 5 or claim 6;
ii) providing a salt solution in the cathode compartment, the cation concentration compartment and the anion concentration compartment;
iii) providing an acid solution in the anode compartment;
iv) passing a fluid containing the alcohol to be purified through the desalination compartment so as to permit ion exchange to take place; and
vi) applying a suitable voltage across the cathode and the anode to cause at least partial regeneration of the ion-exchange material.

**15.** A method according to claim 14, wherein the alcohol to be subjected to the electrodeionization process is obtained by the process of any of claims 7-13.

*FIG. 1*

*FIG. 2*

*FIG. 3*

*FIG. 4*

$n_{Na}$, mol

150 mA

100 mA

0.04

0.02

50 mA

0.00

0          10000      20000      30000

t, s

*FIG. 5*

$N_{Na}$, $*10^{-3}$mol/m$^2$s                    CE,%

1.6                                                   160

N

1.2                                                   140

0.8                                                   120

CE

0.4

0.0                                                   100

20        40        60        80        100

$i$, A/m$^2$

*FIG. 6*

80

60                                                    1h
                                                      3h
E,V   40                                              5h

20

0
    20        40        60        80        100

$i$, A/m$^2$

*FIG. 7*

pH

12

5h

9

3h

6

1h

3

0
    20        40        60        80        100

$i$, A/m$^2$

*FIG. 8*

$n_{Na^+kat}$ / mol

*FIG. 9*

$N_{Na}$, $*10^{-3}$mol/m$^2$s

CE,%

*i*, A/m$^2$

*FIG. 10*

*FIG. 11*

*FIG. 12*

FIG. 13

FIG. 14

FIG. 15

*FIG. 16*

*FIG. 17*

*FIG. 18*

TiO$_2$/Al$_2$O$_3$    TiO$_2$    Al$_2$O$_3$

*FIG. 19*

*FIG. 20*

*FIG. 21*

Purified glycerol

1300

Glycerol+NaCl

900

*FIG. 22*

*FIG. 23*

FIG. 24

FIG. 25

Purified glycerol

25

*FIG. 26*

230

**EUROPEAN SEARCH REPORT**

Application Number

EP 08 17 2625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/02214 A (THORSTENSEN BERNT [NO]) 10 January 2002 (2002-01-10) | 1,2,5 | INV. B01D61/46 B01D61/48 B01D61/58 B01D71/02 |
| Y | * page 5, line 23 - page 9, line 15; figure 1 * | 3,4,6 | |
| X | CA 2 280 535 A1 (SERVO DELDEN BV [NL]; DEGUSSA [DE]) 24 February 2000 (2000-02-24) | 1,2,5 | |
| Y | * page 8, line 12 - line 24; claim 16; figure 1 * <br> * page 3, line 22 - page 6, line 23 * <br> * page 8, line 12 - line 24 * <br> * page 10, line 4 - line 11 * <br> * page 11, line 5 - page 12, line 3 * <br> * page 13, lines 5-32 * | 3,4,6-15 | |
| Y | US 5 254 227 A (CAWLFIELD DAVID W [US] ET AL) 19 October 1993 (1993-10-19) <br> * column 3, line 15 - line 25 * <br> * column 4, line 6 - line 28 * <br> * column 5, line 16 - line 29; figure 1 * <br> * column 6, line 18 - line 60 * <br> * column 8, line 4 - line 55; example 2 * <br> * claims 1,6,9,10 * | 7-15 | |
| | | | TECHNICAL FIELDS SEARCHED (IPC) |
| | | | B01D |
| Y | Y. S. DZYAZKO ET AL.: "Cr(VI) transport through ceramic ion-exchange membranes for treatment of industrial wastewaters" JOURNAL OF APPLIED ELECTROCHEMISTRY, vol. 37, 2007, pages 209-217, XP002529129 <br> * abstract * <br> * paragraphs [2.1.1], [0005] * | 3,4,6 | |

The present search report has been drawn up for all claims

| Place of search | Date of completion of the search | Examiner |
|---|---|---|
| The Hague | 25 May 2009 | Veríssimo, Sónia |

EPO FORM 1503 03.82 (P04C01)

**ANNEX TO THE EUROPEAN SEARCH REPORT**
**ON EUROPEAN PATENT APPLICATION NO.**                    EP 08 17 2625

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2009

| Patent document cited in search report | | Publication date | Patent family member(s) | | Publication date |
|---|---|---|---|---|---|
| WO 0202214 | A | 10-01-2002 | AU | 8454201 A | 14-01-2002 |
| | | | CA | 2413790 A1 | 10-01-2002 |
| | | | EP | 1311338 A1 | 21-05-2003 |
| | | | NO | 20003436 A | 04-01-2002 |
| | | | US | 2004238448 A1 | 02-12-2004 |
| CA 2280535 | A1 | 24-02-2000 | BR | 9903888 A | 19-09-2000 |
| | | | DE | 19838425 A1 | 02-03-2000 |
| | | | EP | 0982283 A2 | 01-03-2000 |
| | | | JP | 2000086558 A | 28-03-2000 |
| US 5254227 | A | 19-10-1993 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0183379 A

- WO 2006074259 A